# EUROPÄISCHE PATENTSCHRIFT

(11) **EP 3 655 293 B1**
(45) Veröffentlichungstag und Bekanntmachung des Hinweises auf die Patenterteilung: **06.03.2024**
(21) Anmeldenummer: 18734525.1
(22) Anmeldetag: 25.06.2018
(51) Int. Cl.: F16C 11/10, B60S 1/24, F16C 11/06

(54) **VERSCHLUSSELEMENT**
CLOSURE ELEMENT
ÉLÉMENT DE FERMETURE

(30) Priorität: 19.07.2017 DE 102017212407; 02.08.2017 DE 102017213439
(43) Veröffentlichungstag der Anmeldung: 27.05.2020
(73) Patentinhaber: Robert Bosch GmbH, 70442 Stuttgart (DE)
(72) Erfinder: HACKL, Viktor, 9400 Sopron (HU); KLEIN, Juergen, 76275 Ettlingen (DE); DEAK, Peter, 1188 Budapest (HU); BOOS, Tino, 76532 Baden-Baden (DE); HEGYI, Akos, 5820 Mezöhegyes (HU); METZ, Ulrich, 77855 Achern (DE)
(86) Internationale Anmeldenummer: PCT/EP2018/066958
(87) Internationale Veröffentlichungsnummer: WO 2019/015918

(56) Entgegenhaltungen:
- WO-A1-2005/033531
- WO-A1-2018/024539
- BE-A- 499 755
- DE-A1-102016 209 861
- FR-A1- 2 887 836
- FR-A5- 2 222 893
- FR-B1- 2 887 836

## Beschreibung

Die Erfindung betrifft ein Verschlusselement für ein Kugelgelenk, eine Kugelschale eines Kugelgelenks, ein Kugelgelenk mit solch einem Verschlusselement und eine Wischanlage mit solch einem Verschlusselement, sowie ein Verfahren zum Anordnen des Verschlusselements auf dem Kugelgelenk.

Es sind Kugelgelenke bekannt, bei denen ein Zapfen mit einem Kugelkopf in einer Kugelschale angeordnet ist. Der Zapfen mit dem Kugelkopf ist in der Kugelschale nicht gesichert, sodass eine ungewollte Demontage des Kugelgelenks leicht erfolgen kann. Der Zapfen mit dem Kugelkopf kann aus der Kugelschale ungewollter Weise herausgezogen werden. Solche nachteiligen Kugelgelenke sind beispielsweise in Wischanlagen für Kraftfahrzeuge eingebaut.

Ein Verschlusselement gemäß dem Oberbegriff des Anspruchs 1 ist aus der WO 2005 / 033531 A1 bekannt.

Die vorliegende Erfindung gemäß dem Hauptanspruch und der nebengeordneten Ansprüche hat den Vorteil, dass das Kugelgelenk durch ein Verschlusselement derartig gesichert ist, dass ein ungewolltes Demontieren des Kugelgelenks nicht möglich ist.

Um den Vorteil der Erfindung zu erhalten, ist das Verschlusselement im Wesentlichen aus zwei zueinander quer angeordneten Bügeln aufgebaut. Dabei ist der erste Bügel zum Sichern des Kugelgelenks ausgebildet. Der erste Bügel sichert das Kugelgelenk, wenn das Verschlusselement in einer Endposition auf der Kugelschale angeordnet ist. Der zweite Bügel positioniert das Verschlusselement bezüglich der Kugelschale in einer Zwischenposition, die das Verschlusselement während eines Montageprozesses des Kugelgelenks einnimmt. Diese Zwischenposition ist besonders vorteilhaft, wenn beispielsweise ein mit einem Kugelkopf behafteter Zapfen in die Kugelschale geschoben wird. Die Zwischenposition kann durch Anschläge definiert werden, sodass sie einer Anschlagsposition gleichkommen kann.

Der erste Bügel umfasst eine Sperrseite und eine Bügelseite, wobei die Seiten durch die Seitenwandungen gebildet werden. Die Sperrseite weist dabei einen Befestigungsschlitz auf, der als Ausnehmung in der der Sperrseite zugeordnete Seitenwandung ausgebildet ist. Der Befestigungsschlitz dient zum Fixieren des Verschlusselements auf dem Kugelgelenk. Weiter weist die Bügelseite den zweiten Bügel auf. Die Bügelseite ist ebenfalls mit einer Ausnehmung ausgebildet, wobei die Ausnehmung einen Teil der Kugelschale des Kugelgelenks aufnehmen kann. Die Ausnehmung der Bügelseite ist in der Regel größer als die Ausnehmung des Befestigungsschlitzes.

Alternativ kann erfindungsgemäß durch die unabhängigen Ansprüche ein Verschlusselement vorgesehen sein, welches zuerst in eine Endposition auf der

Kugelschale angeordnet ist. Nachdem das Verschlusselement fertigpositioniert ist, wird der Kugelkopf durch den ersten Bügel geschoben und durch diesen Gesichert. Der zweite Bügel gewährleistet dabei die Endposition des Verschlusselements. Dadurch sind keine zwei Positionierschritte notwendig. Vorteilhafte Weiterbildungen der Erfindung sind in den abhängigen Ansprüchen dargestellt.

Vorteilhafterweise ist der erste Bügel U-förmig ausgebildet. Seine wesentliche Form ist U-förmig und umfasst zwei Schenkel mit freien Enden. Entlang seiner wesentlichen Verlaufsrichtung ist der U-förmig Bügel mit einem rinnenförmigen Querschnittsprofil ausgestattet. Das rinnenförmige Querschnittsprofil ist nach innen offen, so dass die Rinne nach außen eine geschlossene U-förmig Kontur bildet, die sich im Wesentlichen entlang der Verlaufsrichtung des Bügels erstreckt. Der rinnenförmige Bügel weist somit zwei Seitenwandungen auf, die sich ausgehend von der U-förmigen äußeren Kontur radial nach innen erstrecken. Durch solch einen ausgeformten Bügel ist eine sichere Halterung für das Kugelgelenk möglich.

Erfindungsgemäß erstreckt sich der vorteilhafte zweite Bügel quer von der Bügelseite des ersten Bügels aus. Der zweite Bügel kann sich auch senkrecht von der Bügelseite aus erstrecken. Dabei ist der zweite Bügel bogenförmig von einem Schenkel zum anderen Schenkel des ersten Bügels ausgebildet. Der Bogen kann Rundungen und/oder Ecken aufweisen. Weiter kann der Bogen gerade als auch gekrümmte Abschnitte umfassen, wobei der zweite Bügel sich von den freien Enden des ersten Bügels aus erstreckt. Dabei ist der zweite Bügel unmittelbar an den freien Enden angeformt.

Ist der zweite Bügel U-förmig ausgebildet, so erhält man einen einfach zu montierendes und festsitzendes Verschlusselement. Der zweite Bügel ist vorzugsweise als Streifen ausgebildet, der eine bestimmte Breite in der Erstreckungsrichtung der Schenkel des ersten Bügels aufweist. Die bestimmte Breite des zweiten Bügels kann kürzer sein als die Länge der Schenkel des ersten Bügels, sodass der zweite Bügel nur aus einem Teilabschnitt des ersten Bügels entspringt. Dabei kann ein Rand des zweiten Bügels bündig mit den freien Enden der Schenkel des ersten Bügels ausgebildet sein oder der Rand kann von den freien Enden beabstandet sein. Der U-förmige Bügel ist ähnlich einem Band von einem zum anderen Schenkel ausgebildet. Der zweite Bügel weist keine freien Enden auf. Alternativ kann der zweite Bügel auch die gesamte Länge der Schenkel des ersten Bügels bedecken, sodass die bestimmte Breite des zweiten Bügels die Länge der Schenkel aufweist.

Um eine optimale Montage des Kugelgelenks zu gewährleisten, ist der zweite Bügel mit einer Aussparung für einen Positionierfortsatz ausgestattet. Die Aussparung ist vorzugsweise am Rand des zweiten Bügels derart ausgeformt, dass er nach außen offen ist, sodass der Positionierfortsatz durch eine laterale Bewegung entlang der Erstreckungsrichtung der Schenkel des ersten Bügels in die Aussparung geführt werden kann.

Damit der Positionierfortsatz möglichst einfach in die Aussparung befördert werden kann, ist es von Vorteil, wenn der zweite Bügel federelastisch ausgebildet ist. So kann der zweite Bügel quer zum ersten Bügel elastisch ausgelenkt werden. Die elastische Auslenkung erfolgt vorzugsweise durch den Positionierfortsatz, wenn dieser unter dem Bügel durchgeschoben wird.

Der vorteilhafte Positionierfortsatz ist auf der Kugelschale angeordnet. Die Kugelschale ist schalenförmig und weist eine Seite auf, die dem zweiten Bügel zugewandt ist. Diese Seite ist kuppelförmig ausgeformt. Auf der Kuppel ist der Positionierfortsatz angeordnet. Der Positionierfortsatz ist vorzugsweise exzentrisch auf der Kuppel angeordnet. Die Kuppel kann rund oder eckig ausgebildet sein. Dabei ist eine besonders vorteilhafte Ausführungsform durch einen rampenförmigen Positionierfortsatz gegeben. Der Positionierfortsatz weist eine schiefe Ebene auf, die eine Rampenfunktion erfüllt. Die Rampe des Positionierfortsatzes ist in Schieberichtung des Verschlusselements gerichtet. Entlang der Rampe wird der zweite Bügel geführt, und durch die schiefe Ebene wird der zweite Bügel elastisch quer zum ersten Bügel ausgelenkt. Anhand der schiefen Ebene ist diese elastische Auslenkung des zweiten Bügels durch eine Schiebebewegung in Richtung der Schenkel des ersten Bügels möglich.

Auf der gegenüberliegenden Seite der Kugelschale ist wenigstens ein Fortsatz am Rande der Öffnung der Kugelschale angeformt, der mit dem Befestigungsschlitz zusammenwirkt. Vorzugsweise sind zwei Fortsätze ausgebildet, die in einer Linie entlang dem Durchmesser in Flucht mit der Schieberichtung angeordnet sind. Die Fortsätze positionieren und fixieren die Kugelschale bezüglich des Verschlusselementes in einer Endposition des Montageprozesses.

Der vorteilhafte Montageprozess für das Kugelgelenk umfasst eine Kugelschale die in eine Gelenksstange eingespritzt ist. Die Kugelschale weist vorzugsweise den Positionierfortsatz und zwei Fortsätze auf der gegenüberliegenden Seite auf. Das Verschlusselement wird auf das Ende der Gelenksstange, an dem die Kugelschale eingespritzt ist aufgesetzt. Dabei wird der Befestigungsschlitz auf die Seite der Fortsätze gedreht, sodass der zweite Bügel auf der Seite des Positionierfortsatzes ist. Nun wird das Verschlusselement in Richtung der Schenkel des ersten Bügels entlang der Gelenksstange teilweise über die Kugelschale geschoben, bis die freien Enden der Schenkel an einen ersten Fortsatz anschlagen. Der erste Fortsatz ist dem zweiten Fortsatz diametral bezüglich der Kugelschalenöffnung gegenüberliegend, und von dem Ende der Gelenksstange weiter entfernt als der zweite Fortsatz. In dieser Position ist der Positionierfortsatz in der Aussparung eingerastet. Während des Schiebens in diese Anschlagsposition wird der Positionierfortsatz an den Rand des zweiten Bügels herangeführt, der in Richtung der freien Enden gerichtet ist. Während des Schiebens wird der Positionierfortsatz unter den zweiten Bügel geführt, wobei dieser elastisch ausgelenkt wird. Wenn der Positionierfortsatz unter dem Bügel durchgeführt ist, tritt er in die Aussparung ein und der zweite Bügel relaxiert in seine Ausgangsposition. Diese Weise wird eine sichere und eindeutige Montage des Verschlusselements ermöglicht.

Wenn das Verschlusselement am Anschlag am ersten Fortsatz angeordnet ist, kann ein Zapfen mit einem Kugelkopf durch den Befestigungsschlitz in die Öffnung der Kugelschale geschoben werden. Da der Befestigungsschlitz die Öffnung der Kugelschale verringert, und der Kugelkopf des Zapfens eine größere Abmessung als der Befestigungsschlitz aufweist, werden die Schenkel des ersten Bügels durch den Kugelkopf gespreizt. Die Spreizung der Schenkel erfolgt in elastischer Weise. Passiert der Kugelkopf den Befestigungsschlitz und gelangt durch die Öffnung der Kugelschale in die Kugelschale, so relaxieren die Schenkel in ihre Ausgangsposition.

Anschließend wird das Verschlusselement weitergeschoben, bis der zweite Fortsatz in eine entsprechende Ausnehmung innerhalb des Befestigungsschlitzes zum Liegen kommt. Diese entsprechende Ausnehmung ist komplementär im zweiten Fortsatz ausgebildet und an einem axialen Ende des Befestigungsschlitzes ausgeformt. Am ersten Fortsatz kommt ein in den Befestigungsschlitz ragender Vorsprung zum Liegen, sodass die beiden Fortsätze zwischen der komplementären Ausnehmung und dem Vorsprung bezüglich der Schieberichtung angeordnet sind. In dieser Endposition ist das Verschlusselement sicher montiert.

Der erste Bügel weist die beiden Schenkel mit freien Enden auf und einen Bogen, der dem Ende der Gelenkstange nachgeformt ist. In die rinnenartige Struktur des ersten Bügels kann ein Rand der Gelenkstange eingreifen. Der Rand der Gelenkstange am Ende der Gelenkstange kann in der Endposition in die Rinne einliegen.

Alternativ zu diesem zweistufigen Montageprozess, kann das Verschlusselement direkt in einem Schritt in eine Endposition gebracht werden, in der die Fortsätze in dem Schlitz einrasten. Gleichzeitig ist bei der Alternativen der Positionierfortsatz in der Endposition in der Aussparung in dem zweiten Bügel angeordnet und verbleibt dort. Dazu ist die Aussparung entlang der Erstreckungsrichtung der Schenkel des ersten Bügels auf Höhe eines Übergangsbereichs zwischen den Schenkeln und des Bogens des Bügels angeordnet. Dies kann erreicht werden, indem der zweite Bügel eine bestimmte Breite des Bügels aufweist, die der Länge der Schenkel des ersten Bügels entspricht. Dadurch wird eine robuste Ausführung erreicht. Alternativ kann diese Position der Aussparung erreicht werden, indem die Aussparung in einer Lasche ausgeformt wird, die bis zu dem Übergangsbereich der Schenkel und des Bogens reicht, während die Breite des zweiten Bügels nicht die gesamte Länge der Schenkel einnimmt. Dadurch wird eine hervorragende Elastizität des Verschlusselements gewährleistet. Nachdem das Verschlusselement direkt in die Endposition gebracht wurde, kann der Kugelkopf durch den Schlitz der Unterseite in die Kugelschale gedrückt werden. Dabei spreizen sich die Schenkel soweit, dass der Kopf in die Schale gleiten kann. An der Unterseite des Schlitzes ist hierzu eine Schräge angeformt.

Bei allen Ausführungsformen kann auf der Oberseite des zweiten Bügels eine Vertiefung ausgebildet sein, die für einen Finger vorgesehen sein kann. Die Vertiefung dient zum gegenhalten des in Endposition montierten Verschlusselements beim Einsetzen des Kugelkopfes. Dabei kann ein Finger eines Monteurs auf der Vertiefung aufgesetzt werden und er Kugelkopf gefügt werden.

Es zeigen folgende Figuren die erfindungsgemäße Ausführungsform, die von den Ansprüchen umfasst ist und im nachfolgenden Text beschrieben ist:
- Figur 1: ein Kraftfahrzeug mit einer Wischanlage mit einem erfindungsgemäßen Kugelgelenk,
- Figur 2: ein erfindungsgemäßes Verschlusselement,
- Figur 3: a) bis d) ein Montageablauf des Verschlusselements betrachtet von einer Sperrseite des Verschlusselements,
- Figur 4: a) und b) Schnittan- und Aufsicht des Verschlusselements in einer Anschlagstellung,
- Figur 5: a) bis d) ein Fügen eines Zapfen mit Kugelkopf in der Anschlagstellung, und
- Figur 6: a) bis c) ein alternatives Verschlusselement, das direkt in eine Endposition gebracht wird.

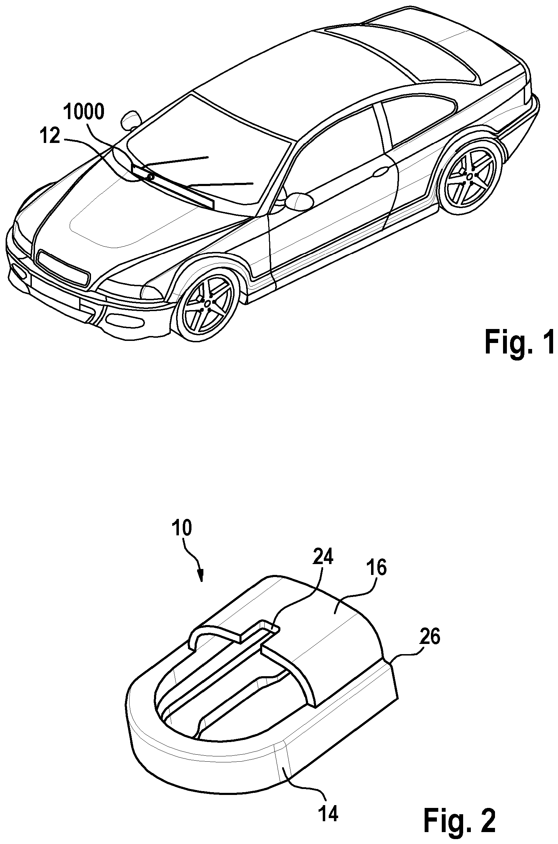

In Figur 1 ist ein Kraftfahrzeug gezeigt, dass eine Wischanlage 1000 aufweist, die mittels eines Gestänges 1001 betrieben wird. Das Gestänge 1001 ist mit Scheibenwischer und einem Motor verbunden. Diese Verbindung wird durch wenigstens ein Kugelgelenk 12 realisiert. Dieses Kugelgelenk 12 ist erfindungsgemäß mit einem Verschlusselement 10 aus den Figuren ausgestattet.

Solch ein Verschlusselement 10 ist in Figur 2 abgebildet. Das Verschlusselement 10 weist zwei Bügel 14, 16 auf. Die beiden Bügel 14, 16 sind quer, vorzugsweise senkrecht, zueinander angeordnet. Der erste Bügel 14 ist U-förmig ausgebildet. Entlang seiner Haupterstreckungsrichtung weist er ein rillenförmiges Querschnittsprofil auf. Dabei ist das rillenförmige Querschnittsprofil radial nach innen geöffnet und dessen Seitenwandungen bilden Ausnehmungen.

Der erste Bügel 14 weist zudem freie Enden 26 auf, die an Schenkeln des U-förmigen ersten Bügels 14 ausgebildet sind. Es sind zwei Schenkel vorhanden, die im Wesentlichen parallel zueinander verlaufen. Die Schenkel sind gleich lang, und gehen in einen gemeinsamen runden Abschnitt über, der den freien Enden 26 gegenüberliegt. Im Bereich der freien Enden 26 ist das ringförmige Querschnittsprofil offen.

Ebenso sind die Ausnehmungen der Seitenwandungen in Richtung der freien Enden 26 offen. Der zweite Bügel 16 ist U-förmig ausgebildet, und erstreckt sich von einem Schenkel zum anderen Schenkel auf einer Bügelseite 20 des ersten Bügels 14. Der zweite Bügel 16 ist streifenförmig ausgebildet. Die Breite des Streifens erstreckt sich in Ausdehnungsrichtung der Schenkel des ersten Bügels 14. Die Bügelseite 20 ist durch die Seitenwandungen gebildet.

Der zweite Bügel 16 weist einen Rand auf, der in Richtung der freien Enden 26 gerichtet ist. Dieser Rand ist bündig mit den freien Enden 26. An einem gegenüberliegenden Rand des zweiten Bügels 16 ist eine Aussparung 24 ausgeformt. Diese Aussparung 24 ist mittig an dem Rand des zweiten Bügels 26, sodass diese Aussparung 24 in Richtung des runden Abschnitts des ersten Bügels 14 geöffnet ist. Im Wesentlichen ist die Aussparung 24 mit einem rechteckigen Querschnitt versehen.

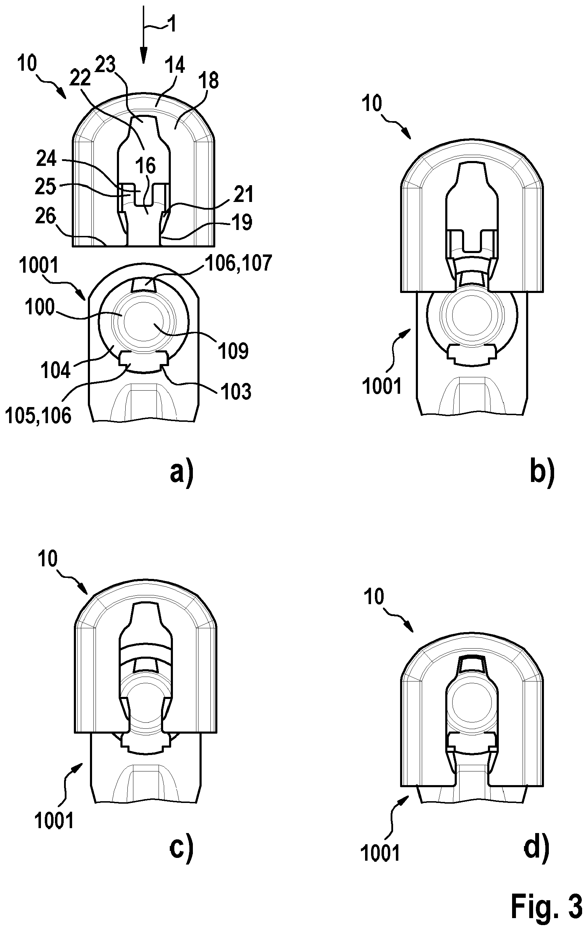

Der Montageprozess des Verschlusselements 10 ist in Figur 3 in vier Schritten a) bis d) abgebildet.

Dabei ist im Bereich des Endes einer Gelenksstange 1001 eine Kugelschale 100 angespritzt. Die Kugelschale 100 ist mit ihre Öffnung 109 gezeigt. Die Öffnung 109 ist von einem Bund umsäumt, auf dem zwei diametral gegenüberliegende Fortsätze 106 angeordnet sind. Die beiden Fortsätze 106 fluchten mit der Montagerichtung 1 des Verschlusselements 10. Die beiden Fortsätze 106 erstrecken sich im Wesentlichen senkrecht von dem Bund in eine gemeinsame Richtung, die quer zu den Schenkeln des ersten Bügels 14 ist.

In dieser Richtung ist eine Sperrseite 18 des ersten Bügels 14 ausgebildet, die einen Befestigungsschlitz 22 beinhaltet. Die Sperrseite 18 ist durch die Seitenwandungen des rillenförmigen Querschnittsprofils gegeben. Der Befestigungsschlitz 22 weist quer zu den Schenkeln eine Abmessung auf, die geringer ist als der Durchmesser der Öffnung 109.

Des Weiteren erstreckt sich der Befestigungsschlitz 22 in Richtung der Schenkel des ersten Bogens 14. Im Befestigungsschlitz 22 ist eine Ausnehmung 23 ausgebildet, die am axialen Ende des Befestigungsschlitzes 22 im Bereich des runden Abschnitts des ersten Bogens 14 ausgeformt ist. Diese Ausnehmung 23 ist komplementär zu einem zweiten Fortsatz 107 der beiden Fortsätze 106, wobei der zweite Fortsatz 107 in Montagerichtung 1 des Verschlusselements 10 zu Beginn der Montage wie in Figur 3 a) dem Verschlusselement 10 näherliegt als ein erster Fortsatz 105 der beiden Fortsätze 106. Der zweite Fortsatz 107 ist näher am runden Abschnitt des ersten Bügels 14. Der zweite Fortsatz 107 weist einen trapezförmigen Querschnitt in einer Ebene parallel zur Öffnung 109 auf, wobei die komplementäre Ausnehmung 23 eine trapezförmige Kontur hat. Der erste Fortsatz 105 weist im Wesentlichen einen T-förmigen Querschnitt auf. Dabei ist der T-förmige Querschnitt in Montagerichtung 1 ausgerichtet.

Am gegenüberliegenden Ende des Befestigungsschlitzes 22 ist im Bereich der freien Enden 26 ein Vorsprung 19 an jeder dem jeweiligen Schenkel zugeordneten Randseite des Befestigungsschlitzes 22 an geformt. Der Vorsprung 19 ist stufenförmig in Montagerichtung 1 entlang des Befestigungsschlitzes 22 ausgeformt. Dabei ist die Stufe des Vorsprungs 19 in Richtung der komplementären Ausnehmung 23 gerichtet. Der Vorsprung 19 erstreckt sich bündig bis zum freien Ende 26. Auf der nach außen gerichteten Seite der Sperrseite 18 ist an dem Vorsprung 19 eine Fase 21 angeformt. Die Fase 21 weist eine dreieckförmige Kontur auf, deren Spitze mit der Stufe des Vorsprungs 19 zusammenfällt. Durch die Fase 21 verjüngt sich die Stufe nach innen. Die Stufe ist komplementär zu der Hinterschneidung 103 des T-förmigen Querschnitts des ersten Fortsatzes 105.

Während des Montageprozesses wird durch das Schieben des Verschlusselements 10 als erstes der zweite Fortsatz 107 in den Befestigungsschlitz 22 gemäß Figur 3 b) befördert. Die Gelenksstange 1001 wird dabei in das ringförmige Querschnittsprofil des U-förmigen ersten Bügels 14 geschoben.

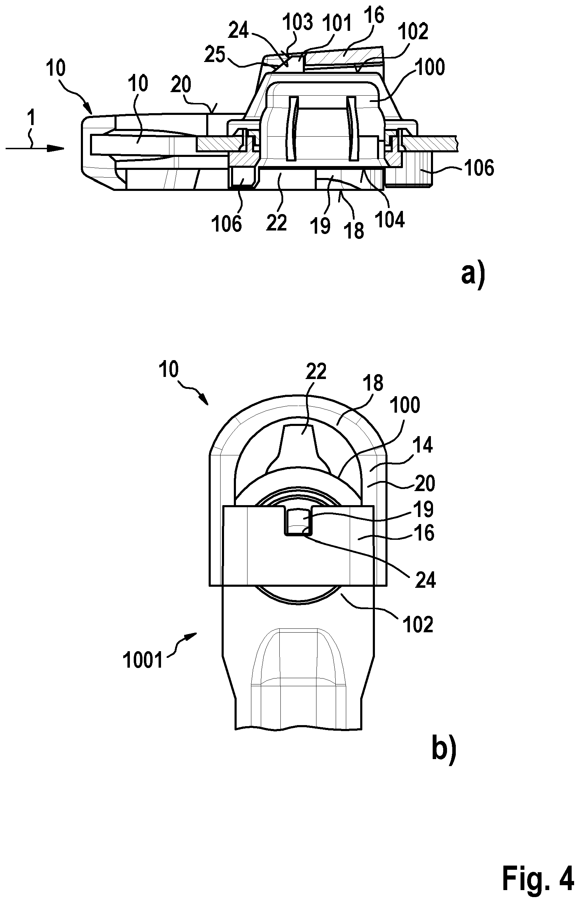

Das Verschlusselement 10 wird so lange in Montagerichtung 1 geschoben, bis es in eine Anschlagsposition gemäß Figur 3 c) gelangt. Die Anschlagsposition ist auch in Figur 4 gezeigt. In der Anschlagsposition schlägt der dem freien Ende 26 zugewandte Teil des Vorsprungs 19 an den ersten Fortsatz 105 an. Dabei liegt der Vorsprung 19 auf der Seite des ersten Fortsatzes 105 an, die der Öffnung 109 zugewandt ist. Dabei ist der zweite Absatz 107 von seiner komplementären Ausnehmungen 23 beabstandet.

In Figur 3 d) ist das Verschlusselement 10 soweit auf die Kugelschale 100 geschoben, dass der zweite Fortsatz 105 in der komplementären Ausnehmung 23 eingesetzt ist. Gleichzeitig sind die Stufen der Vorsprünge 19 links und rechts in der Hinterschneidung 103 des T-förmigen ersten Fortsatzes 105 gefügt.

In Figur 4 ist die Anschlagsposition zum einen im Schnitt gemäß a) und zum anderen von einer Bügelseite 20 gemäß b) gezeigt.

In der Anschlagsposition ist neben dem Anliegen des Vorsprungs 19 an dem ersten Fortsatz 106 auch der Positionierfortsatz 101 in der Aussparung 24 angeordnet. Dabei schlägt eine axial gerichtete Fläche, die sich im Wesentlichen senkrecht von einer Unterseite einer Kuppel der Kugelschale 100 erstreckt, an der Kontur der Aussparung 24 an.

Um in die Anschlagsposition zu gelangen, wird der Positionierfortsatz 101 unter dem zweiten Bogen 16 hindurchgeschoben, während die Gelenksstange 1001 in das rillenförmige Querschnittsprofil des ersten Bügels 14 geschoben wird. Damit ein leichtes Schieben erfolgen kann, weist der Positionierfortsatz 101 in Montagerichtung 1 eine schiefe Ebene 103 auf. Die schiefe Ebene 103 bewirkt eine rampenartige Ausbildung des Positionierfortsatzes 101. Weiter ist der zweite Bügel 16 gegenüber der Montagerichtung 1 verkippt, sodass die Montagerichtung 1 und eine gedachte Linie entlang wenigstens dem Bereich der Unterseite des zweiten Bogens 16, an dem der Positionierfortsatz 101 entlanggeführt wird, einen spitzen Winkel einschließen. In anderen Worten, die Gelenksstange 1001 und die Unterseite des zweiten Bogens 16 schließen einen spitzen Winkel ein, der in Richtung der Gelenksstange geöffnet ist. Wird nun in Montagerichtung 1 der Positionierfortsatz 101 an den zu den freien Enden 26 gerichteten Rand des zweiten Bogens 16 herangeführt, so wirkt die schiefe Ebene 103 wenigstens mit der verkippten Unterseite des zweiten Bogens 16 derart zusammen, dass sie leicht unter den zweiten Bogen 16 durchgeschoben werden kann. Der zweite Bogen 16 ist elastisch und wird zusätzlich durch den Positionierfortsatz nach oben ausgelenkt.

Weiter weist der Bereich der Aussparung 24 am dem runden Abschnitt zugewandten Rand eine Fase 25 auf, die ein Kollidieren der Unterseite des zweiten Bogens 16 mit der Kuppel der Kugelschale 100 vermeidet. Durch die Fase 25 ist die Unterseite von der Kuppel beabstandet. Wäre diese Fase 25 nicht da, so würde aufgrund des spitzen Winkels zwischen dem zweiten Bogen 16 und der Gelenksstange 1001 der Rand des zweiten Bogens 16 auf der Kuppel aufliegen.

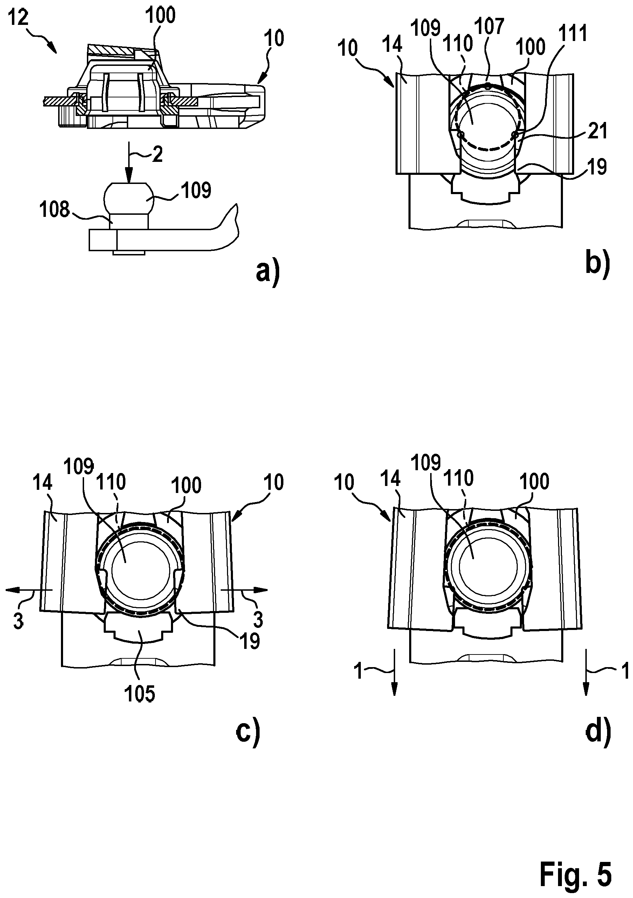

In Figur 5 zeigt die Montage eines Zapfens 108 mit einem Kugelkopf 110 in die Kugelschale 100 des Kugelgelenks 12, wobei das Verschlusselement 10 in Anschlagsposition ist. Die Kontur des Kugelkopfs ist durch die gestrichelte Linie schemenhaft dargestellt.

Der Zapfen 108 wird in einer Fügerichtung 2 in die Kugelschale 100 gemäß a) gefügt. Dabei laufen die Schritte gemäß b) bis d) ab. Der Kugelkopf 110 weist eine geringere Abmessung des Durchmessers auf als die Abmessung der Breite des Befestigungsschlitzes 22. Da nun die Öffnung 109 durch den Rand des Befestigungsschlitzes 22 und den Vorsprüngen 19 versperrt ist, liegt ein zu fügender Zapfen 108 als erstes an drei Anlagepunkten 111 auf, wie in b) durch drei schwarze schematische Punkte gezeigt ist. Er liegt auf den Fasen 21 und radial an dem zweiten Fortsatz 107 an. Die Fasen 21 führen gemäß ihrer schiefen Ebene den Kugelkopf 110 des Zapfens 108 gegen die radial gerichtete Seite des zweiten Fortsatzes 107 und nach innen durch die Öffnung 109.

Durch die Kraft der schiefen Ebene werden die Schenkel des ersten Bügels 14 in eine Richtung 3 quer zu den Schenkeln gespreizt. Dies erfolgt bis die Vorsprünge 19 nicht mehr an der radial gerichteten Seite des ersten Fortsatzes 105 anliegen, sondern zueinander weiter beabstandet sind, als der erste Fortsatz 105 breit ist. Nun kann das Schieben in Montagerichtung 1 des Verschlusselementes 10 weiter erfolgen. Das Schieben wird durch die schiefe Ebene der Fase 19 unterstützt oder vollständig alleine bewerkstelligt. Wenn der Kugelkopf 110 nun vollständig von den Fasen 19 geglitten ist, kann er durch die Öffnung 109 in die Kugelschale 100 gleiten. Ein weiteres Schieben führt zu einem relaxieren der Schenkel, wenn die Vorsprünge 19 hinter dem zweiten Fortsatz 105 positioniert sind. Dabei rasten sie in die Hinterschneidungen 103 ein und die Öffnung 109 ist derart verengt, dass der Kugelkopf 110 nicht entnommen werden kann.

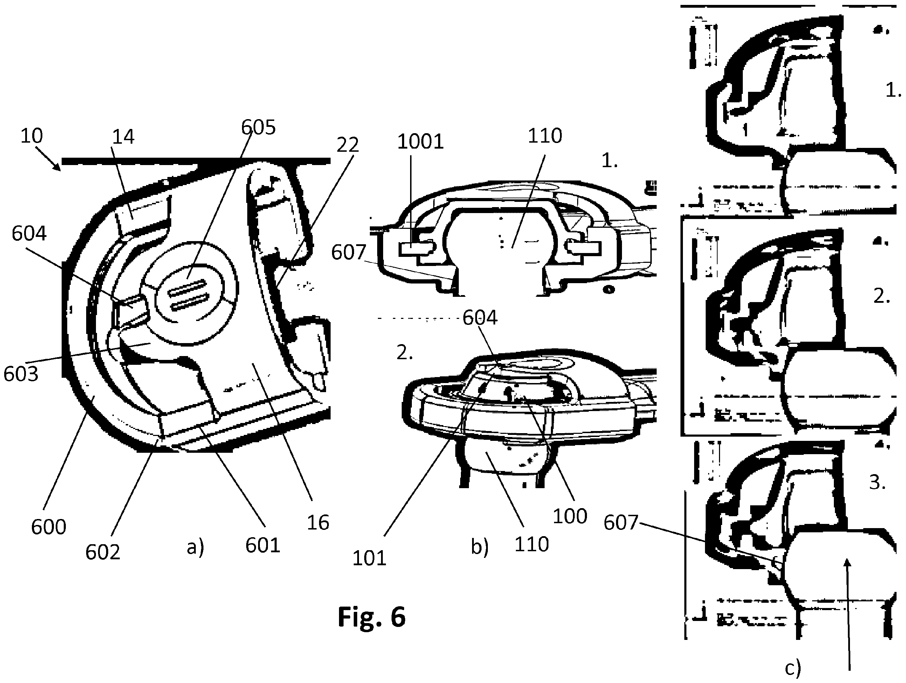

In Figur 6 ist eine alternative Ausführungsform des Verschlusselements 10 gezeigt. Grundsätzlich ist die Struktur und Funktion dieser Alternative gleich zu der vorhergehen beschriebenen Ausführungsform des Verschlusselements 10. Daher können die Merkmale, insbesondere bezüglich dem Befestigungsschlitz 22 und/oder der Montage des Kugelkopfes und/oder der Bügelseite und/oder der Sperrseite, der anderen Ausführungsform mit dieser Alternative kombiniert werden. Das alternative Verschlusselement 10 kann direkt in der Endposition montiert werden. Das Verschlusselement zeigt in Figur 6 a) zwei Schenkel 601 mit freien Enden und ein Bogen 600 zwischen den Schenkeln 601, wobei durch die Schenkel und den Bogen der erste Bügel 14 aufgebaut ist. Zwischen einem Schenkel und dem bogen ist ein Übergangsbereich 602 angeordnet, an dem der Bogen in den Schenkel übergeht. Dies kann auch bei der vorhergehenden Ausführungsform der Falls sein. Der zweite Bügel 16 weist eine Vertiefung 605 für einen Finger eines Monteurs auf. Der Monteur kann auf die Vertiefung 605 drücken und eine Gegenhaltekraft für die Montage des Kugelkopf 110 erzeugen. Ferner ist eine Lasche 603 mittig an dem zweiten Bügel angeformt, die sich von einem dem Bogen 600 zugewandten Rand des Bügels 16 abstehend erstreckt. Die Lasche weist eine halbkreisförmige Kontur auf, in der die Aussparung 604 für den Positionierfortsatz 101 ausgeformt ist. Die Aussparung ist am distalen Ende der Lasche ausgeformt und in Erstreckungsrichtung der Schenkel 601 auf Höhe des Übergangsbereichs 602. Wenn das Verschlusselement 10 in Endposition montiert ist, wie in Figur 6 b) 2. gezeigt ist, der Positionierfortsatz 101 in der Aussparung 604 angeordnet und die Lasche 604 bedeckt die Kugelschale 100. Der Kugelkopf 110 ist nach der Montage in der Kugelschale angeordnet, was in Figur 6 b) 1. zu sehen ist, wobei der Kugelkopf 110 über Schrägen 607 die in der Kontur des Befestigungsschlitzes 22 angeordnet sind gefügt worden ist. Der Rand der Gelenkstange 1001 sitzt in der rinnenartigen Struktur des ersten Bügels 14. Der Bügel 14 umsäumt dabei das Ende des Gelenkstange 1001 mit seinen Schenkeln und dem Bogen. Dies kann auch für die vorhergehend beschriebenen Ausführungsformen gelten. Die Montage des Verschlusselements aus Figur 6 erfolgt ebenfalls durch ein Aufschieben in Längsrichtung der Gelenkstange, wie es bei den vorhergehenden Ausführungsformen erfolgt. Ebenso werden die Schenkel gespreizt und Fortsatze an der Kugelschale können umgriffen werden. In Figur 6 c) ist gezeigt wie ein Kugelkopf in Pfeilrichtung in die Kugelschale 100 gefügt wird. Der Kugelkopf 110 wird durch den Befestigungsschlitz 22 in die Kugelschale 100 geschoben, wobei sich die Schenkel 601 spreizen. Dabei wird der Kugelkopf 110 an den Befestigungsschlitz 22 angesetzt, wie in Figur 6 c) 1. gezeigt ist. Ein Monteur kann nun seinen Finger auf die Vertiefung 605 drücken und eine Gegenhaltekraft für die Montage in Pfeilrichtung erzeugen. Mittels der Schräge 607 beginnt der Kugelkopf in die Kugelschale zu gleiten und gleichzeitig die Schenkel 601 zu spreizen, was in Figur 6 c) 2 gezeigt ist. Das Spreizen erreicht einen maximalen Wert, wenn die Schrägen ungefähr auf dem Ort des größten Durchmessers des Kugelkopfes in Pfeilrichtung angeordnet sind, was in Figur 6 c) 3. gezeigt ist. Wenn der Ort des größten Durchmessers den Bereich des Befestigungsschlitzes 22 passiert hat, denn relaxieren die Schenkel wieder in ihren ursprünglichen Zustand und versperren dem Kugelkopf die Öffnung in der Kugelschale und verhindern ein einfaches Herausnehmen des Kugelkopfes.

## Patentansprüche

1. Verschlusselement (10) zum Sichern eines Kugelgelenks (12), wobei das Verschlusselement (10) zwei zueinander quer angeordnete Bügel (14, 16) umfasst, und wobei ein erster Bügel (14) für das Sichern des Kugelgelenks (12) und der zweite Bügel (16) für ein Positionieren des Verschlusselements (10) während der Montage des Kugelgelenks (12) vorgesehen ist,
**dadurch gekennzeichnet, dass**
der erste Bügel (14) eine Sperrseite (18) und eine Bügelseite (20) aufweist, wobei die Sperrseite (18) einen Befestigungsschlitz (22) zum Fixieren des Verschlusselements (10) und die Bügelseite (20) den zweiten Bügel (16) aufweist.

2. Verschlusselement (10) nach Anspruch 1, **dadurch gekennzeichnet, dass** der erste Bügel (14) U-förmig ausgebildet ist, und entlang seiner wesentlichen Verlaufsrichtung ein rinnenartiges Querschnittsprofil aufweist.

3. Verschlusselement (10) nach einem der vorherigen Ansprüche, **dadurch gekennzeichnet, dass** sich der zweite Bügel (16) quer, insbesondere senkrecht, von der Bügelseite (20) erstreckt, wobei er vorzugsweise an den freien Enden (26) des ersten Bügels (14) unmittelbar angebracht ist.

4. Verschlusselement (10) nach einem der vorherigen Ansprüche, **dadurch gekennzeichnet, dass** der zweite Bügel (16) u-förmig ist, und vorzugsweise aus einem Streifen besteht, und insbesondere eine Lasche (603) aufweist.

5. Verschlusselement (10) nach einem der vorherigen Ansprüche, **dadurch gekennzeichnet, dass** der zweite Bügel (16) eine Aussparung (24, 604) für einen Positionierfortsatz (101) aufweist, wobei die Aussparung (604) insbesondere an der Lasche (603) ausgebildet ist.

6. Verschlusselement (10) nach einem der vorherigen Ansprüche, **dadurch gekennzeichnet, dass** der zweite Bügel (16) federelastisch ist.

7. Kugelschale (100) zum Bilden eines Kugelgelenks (12), das durch das Verschlusselement (10) nach einem der vorherigen Ansprüche gesichert wird,
**dadurch gekennzeichnet, dass** die
Kugelschale (100) den Positionierfortsatz (101) auf einer dem zweiten Bügel (16) zugewandten Seite (102), vorzugsweise exzentrisch, aufweist, wobei auf einer Seite (104) der Kugelschale (100) Fortsätze (106) angeformt sind, die dazu ausgebildet sind, mit dem Befestigungsschlitz (22) zusammenwirken.

8. Kugelschale (100) nach Anspruch 7, **dadurch gekennzeichnet, dass** der Positionierfortsatz (101) rampenförmig ist.

9. Kugelgelenk (12) umfassend die Kugelschale (100) nach Anspruch 7 oder 8 und das Verschlusselement (10) nach einem der Ansprüche 1 bis 6, wobei ein Zapfen (108) in der Kugelschale (100) angeordnet ist, und das Verschlusselement (10) eine Öffnung (109) der Kugelschale (100) mit dem Befestigungsschlitz (22) derart verschließt, dass der Zapfen (108) durch den Befestigungsschlitz (22) in die Kugelschale (100) geführt ist.

10. Kugelgelenk (12) nach Anspruch 9 abhängig von Anspruch 5, **dadurch gekennzeichnet, dass** der Positionierfortsatz (101) in der Aussparung (24) eingreift.

11. Wischanlage (1000) mit einem Gestänge (1001), das wenigstens ein Kugelgelenk (12) mit dem Verschlusselement (10) nach Anspruch 9 oder 10 aufweist.

12. Verfahren zum Montieren eines Verschlusselements (10) nach einem der der Ansprüche 1 bis 6 auf ein Kugelgelenk (12) nach Anspruch 9 oder 10, **dadurch gekennzeichnet, dass** das Verschlusselement (10) auf das Kugelgelenk (12) geschoben wird, und dabei der erste Bügel (14) federelastisch gespreizt wird.

13. Verfahren nach Anspruch 12, **dadurch gekennzeichnet, dass** der zweite Bügel (16) federelastisch durch den Positionierfortsatz (101) ausgelenkt wird, wenn dieser während des Schiebens unter dem zweiten Bügel (16) hindurchgeführt wird bis er in die Aussparung (24, 604) einrastet.

## Claims

1. Closure element (10) for securing a ball joint (12), wherein the closure element (10) comprises two mutually transversely arranged brackets (14, 16), and wherein a first bracket (14) is provided for securing the ball joint (12) and the second bracket (16) is provided for positioning the closure element (10) during the mounting of the ball joint (12),
**characterized in that**
the first bracket (14) features a blocking side (18) and a bracket side (20), wherein the blocking side (18) has a fastening slot (22) for fixing the closure element (10) and the bracket side (20) features the second bracket (16) .

2. Closure element (10) according to Claim 1, **characterized in that** the first bracket (14) is designed in a U-shape and features a groove-like cross-sectional profile along its principal direction of extent.

3. Closure element (10) according to one of the preceding claims, **characterized in that** the second bracket (16) extends transversely, in particular perpendicularly, from the bracket side (20), wherein it is preferably mounted directly on the free ends (26) of the first bracket (14).

4. Closure element (10) according to one of the preceding claims, **characterized in that** the second bracket (16) is U-shaped and consists preferably of a strip and features in particular a lug (603).

5. Closure element (10) according to one of the preceding claims, **characterized in that** the second bracket (16) features a cutout (24, 604) for a positioning extension (101), wherein the cutout (604) is in particular formed on the lug (603).

6. Closure element (10) according to one of the preceding claims, **characterized in that** the second bracket (16) is resiliently elastic.

7. Ball socket (100) for forming a ball joint (12) that is secured by the closure element (10) according to one of the preceding claims, **characterized in that** the ball socket (100) features the positioning extension (101), preferably eccentrically, on a side (102) facing the second bracket (16), wherein extensions (106) that are designed to interact with the fastening slot (22) are formed on one side (104) of the ball socket (100).

8. Ball socket (100) according to Claim 7, **characterized in that** the positioning extension (101) is ramp-shaped.

9. Ball joint (12) comprising the ball socket (100) according to Claim 7 or 8 and the closure element (10) according to one of Claims 1 to 6, wherein a peg (108) is arranged in the ball socket (100) and the closure element (10) closes an opening (109) of the ball socket (100) with the fastening slot (22) in such a manner that the peg (108) is guided into the ball socket (100) through the fastening slot (22).

10. Ball joint (12) according to Claim 9 when dependent on Claim 5, **characterized in that** the positioning extension (101) engages in the cutout (24).

11. Wiper system (1000) having a linkage (1001) that features at least one ball joint (12) with the closure element (10) according to Claim 9 or 10.

12. Method for mounting a closure element (10) according to one of Claims 1 to 6 on a ball joint (12) according to Claim 9 or 10, **characterized in that** the closure element (10) is pushed onto the ball joint (12) and the first bracket (14) is thereby splayed in a resiliently elastic manner.

13. Method according to Claim 12, **characterized in that** the second bracket (16) is deflected in a resiliently elastic manner by the positioning extension (101) when it is guided through under the second bracket (16) during the pushing operation, until it engages in the cutout (24, 604) .

## Revendications

1. Élément de verrouillage (10) pour bloquer une articulation à rotule (12), l'élément de verrouillage (10) comprenant deux étriers (14, 16) disposés transversalement l'un par rapport à l'autre, et un premier étrier (14) étant prévu pour bloquer l'articulation à rotule (12) et le deuxième étrier (16) étant prévu pour un positionnement de l'élément de verrouillage (10) pendant le montage de l'articulation à rotule (12),
**caractérisé en ce que**
le premier étrier (14) présente un côté de blocage (18) et un côté étrier (20), le côté de blocage (18) présentant une fente de fixation (22) pour fixer l'élément de verrouillage (10) et le côté étrier (20) présentant le deuxième étrier (16).

2. Élément de verrouillage (10) selon la revendication 1, **caractérisé en ce que** le premier étrier (14) est réalisé en forme de U et présente un profil de section transversale en forme de gouttière le long de sa direction d'extension essentielle.

3. Élément de verrouillage (10) selon l'une des revendications précédentes, **caractérisé en ce que** le deuxième étrier (16) s'étend transversalement, notamment perpendiculairement, à partir du côté étrier (20), en étant de préférence monté directement sur les extrémités libres (26) du premier étrier (14).

4. Élément de verrouillage (10) selon l'une des revendications précédentes, **caractérisé en ce que** le deuxième étrier (16) est en forme de U, et est de préférence constitué d'une bande, et comporte notamment une patte (603) .

5. Élément de verrouillage (10) selon l'une des revendications précédentes, **caractérisé en ce que** le deuxième étrier (16) présente un évidement (24, 604) pour une extension de positionnement (101), l'évidement (604) étant notamment formé sur la languette (603).

6. Élément de verrouillage (10) selon l'une des revendications précédentes, **caractérisé en ce que** le deuxième étrier (16) est élastique.

7. Coque sphérique (100) pour former une articulation sphérique (12) qui est fixée par l'élément de verrouillage (10) selon l'une des revendications précédentes, **caractérisée en ce que** la coque sphérique (100) présente l'extension de positionnement (101) sur un côté (102) tourné vers le deuxième étrier (16), de préférence de manière excentrée, des extensions (106) étant formées sur un côté (104) de la coque sphérique (100), lesquelles sont conçues de façon à coopérer avec la fente de fixation (22).

8. Coque sphérique (100) selon la revendication 7, **caractérisée en ce que** l'extension de positionnement (101) est en forme de rampe.

9. Articulation à rotule (12) comprenant la coque sphérique (100) selon la revendication 7 ou 8 et l'élément de verrouillage (10) selon l'une des revendications 1 à 6, dans laquelle un tenon (108) est agencé dans la coque sphérique (100) et l'élément de verrouillage (10) ferme une ouverture (109) de la coque sphérique (100) avec la fente de fixation (22) de telle sorte que le tenon (108) soit guidé dans la coque sphérique (100) à travers la fente de fixation (22).

10. Articulation à rotule (12) selon la revendication 9, dépendant de la revendication 5, **caractérisée en ce que** l'extension de positionnement (101) s'engage dans l'évidement (24),

11. Système d'essuyage (1000) comprenant une tringlerie (1001) comportant au moins une articulation à rotule (12) avec l'élément de verrouillage (10) selon la revendication 9 ou 10.

12. Procédé de montage d'un élément de verrouillage (10) selon l'une des revendications 1 à 6 sur une articulation à rotule (12) selon la revendication 9 ou 10, **caractérisé en ce que** l'élément de verrouillage (10) est poussé sur l'articulation à rotule (12), et **en ce que** le premier étrier (14) est alors écarté élastiquement.

13. Procédé selon la revendication 12, **caractérisé en ce que** le deuxième étrier (16) est dévié élastiquement par l'extension de positionnement (101) lorsque celle-ci est passée sous le deuxième étrier (16) pendant le coulissement jusqu'à ce qu'elle s'enclenche dans l'évidement (24, 604).
